(19) Europäisches Patentamt
European Patent Office
Office européen des brevets

(11) **EP 3 980 715 B1**

(12) **FASCICULE DE BREVET EUROPEEN**

(45) Date de publication et mention de la délivrance du brevet:
**28.08.2024 Bulletin 2024/35**

(21) Numéro de dépôt: **19779530.5**

(22) Date de dépôt: **07.06.2019**

(51) Classification Internationale des Brevets (IPC):
*G01B 11/24* (2006.01)    *G01B 9/0209* (2022.01)
*G01B 9/02015* (2022.01)    *G01B 9/02* (2022.01)
*G01B 11/00* (2006.01)    *G01B 11/06* (2006.01)
*G01B 11/14* (2006.01)    *G01M 11/02* (2006.01)
*G02B 27/62* (2006.01)    *G02B 13/00* (2006.01)

(52) Classification Coopérative des Brevets (CPC):
**G01B 9/0209; G01B 9/02027; G01B 9/02047;
G01B 9/02084; G01B 11/002; G01B 11/0675;
G01B 11/14; G01B 11/2441; G01M 11/0271;
G02B 27/62;** G02B 13/001

(86) Numéro de dépôt international:
**PCT/FR2019/051376**

(87) Numéro de publication internationale:
**WO 2020/245511 (10.12.2020 Gazette 2020/50)**

(54) **DISPOSITIF ET PROCÉDÉ DE MESURE D'INTERFACES D'UN ÉLÉMENT OPTIQUE**

VERFAHREN UND VORRICHTUNG ZUM VERMESSEN VON GRENZFLÄCHEN EINES OPTISCHEN ELEMENTS

DEVICE AND METHOD FOR MEASURING INTERFACES OF AN OPTICAL ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**13.04.2022 Bulletin 2022/15**

(73) Titulaire: **Fogale Nanotech**
**30900 Nîmes (FR)**

(72) Inventeurs:
• **COURTEVILLE, Alain**
**30111 Congenies (FR)**

• **GODAVARTHI, Charankumar**
**30900 Nîmes (FR)**

(74) Mandataire: **IPAZ**
**Bâtiment Platon**
**Parc Les Algorithmes**
**91190 Saint-Aubin (FR)**

(56) Documents cités:
**CN-A- 101 226 344    CN-A- 102 494 623
FR-A1- 2 959 305**

## Description

### Domaine technique

La présente invention concerne un dispositif de mesure de forme d'interfaces dans un élément optique comprenant une pluralité d'interfaces. Elle concerne également un procédé de mesure de forme d'interfaces dans un tel élément optique.

Le domaine de l'invention est, de manière non limitative, celui des systèmes de contrôle et de mesure optiques, notamment pour la fabrication d'éléments optiques.

### Etat de la technique

Lors de la fabrication d'éléments optiques, tels que des lentilles ou des objectifs comportant plusieurs lentilles, il peut être nécessaire de contrôler ou mesurer des formes des interfaces, ou surfaces, des éléments optiques.

Les éléments optiques, tels que des assemblages optiques ou des objectifs d'imagerie, sont en général constitués d'une ou d'une pluralité de lentilles et éventuellement d'autres composants destinés à mettre des faisceaux optiques en forme. Ces composants, ou ces lentilles, peuvent être assemblés sous forme d'empilement dans un support tel qu'un barillet.

Les performances optiques d'un tel élément optique, par exemple un objectif d'imagerie, dépendent essentiellement de la précision de fabrication des composants optiques (tels que les lentilles) qui le composent, et de la précision avec laquelle ils sont positionnés dans l'assemblage.

Il est donc nécessaire de contrôler les composants et leurs assemblages. En particulier, dans un assemblage il peut être nécessaire de contrôler la forme des interfaces des composants optiques ou des lentilles, en vue de déterminer par exemple des éléments non conformes ou mal positionnés, déformés, ou inclinés.

Un dispositif et un procédé pour contrôler des formes d'éléments optiques tels que des lentilles sont décrits dans le document US 9,658,129 B2. Les formes de surfaces sont mesurées en utilisant une technique interférométrique, notamment pour en déterminer le sommet ou l'apex. Toutefois, ce dispositif nécessite de tourner la lentille pour mesurer les deux faces. Il ne permet donc que la mesure de composants individuels, avant qu'ils soient assemblés.

FR2959305A1 décrit un dispositif optique et un procédé d'inspection d'objets structurés.

### Exposé de l'invention

Un but de la présente invention est de pallier ces inconvénients.

Il est notamment un but de l'invention de proposer un dispositif et un procédé de mesure, pour mesurer la forme d'une interface ou d'une surface d'un élément optique comprenant une pluralité d'interfaces, ce dispositif et ce procédé permettant des mesures d'interfaces dans un assemblage optique.

Un autre but de la présente invention est de proposer un dispositif et un procédé de mesure adaptés pour mesurer ou contrôler la forme et le positionnement d'une interface dans un élément optique à travers d'autres interfaces de cet élément optique.

Il est encore un but de la présente invention de proposer un dispositif et un procédé de mesure pour mesurer les formes d'interfaces successives.

Au moins un de ces buts est atteint avec un dispositif de mesure, pour mesurer la forme d'une interface à mesurer d'un élément optique comprenant une pluralité d'interfaces, le dispositif comprenant entre autres:

- des moyens de mesure avec au moins un capteur interférométrique illuminé par une source à faible cohérence, configuré pour diriger un faisceau de mesure vers l'élément optique de sorte à traverser ladite pluralité d'interfaces, et pour détecter sélectivement un signal d'interférence résultant d'interférences entre le faisceau de mesure réfléchi par ladite interface à mesurer et un faisceau de référence ;
- des moyens de positionnement configurés pour positionner relativement une zone de cohérence du capteur interférométrique au niveau de l'interface à mesurer ;
- des moyens numériques de traitement configurés pour produire, à partir du signal d'interférence, une information de forme de ladite interface à mesurer selon un champ de vue.

Dans le cadre de la présente invention, un « élément optique » peut désigner tout type d'objet optique, destiné par exemple à être inséré dans un faisceau optique, à mettre en forme un faisceau optique, et/ou à réaliser une image. Il peut désigner par exemple :

- un composant optique unique tel qu'une lentille ou une lame ;

- un assemblage de lentilles et/ou d'autres composants optiques, tel qu'un objectif d'imagerie, de caméra, ou un dispositif de mise en forme d'un faisceau optique.

Un élément optique peut notamment être constitué de, ou comprendre, des éléments réfractifs tels que des lentilles.

Le dispositif selon la présente invention permet d'effectuer des mesures d'interfaces d'un élément optique, et notamment d'interfaces empilées, pour en déduire la topologie de ces interfaces. Ces interfaces peuvent par exemple comprendre des surfaces de lentilles. Les mesures permettent de déterminer, par exemple, des formes et des positionnements des interfaces, ou une inclinaison ou un décentrement d'une lentille dans l'élément optique. Il est également possible de déduire des mesures d'épaisseur et l'indice de réfraction du matériau d'une lentille composant de l'élément optique.

Ces mesures peuvent être réalisées avec un faisceau de mesure d'un capteur interférométrique illuminé par une source lumineuse à faible cohérence. Pour cela, le dispositif selon l'invention dispose de moyens de positionnement pour positionner relativement une zone de cohérence du capteur interférométrique au niveau de l'interface à mesurer. L'interface à mesurer peut être une interface « enterrée », c'est-à-dire, l'une des interfaces à l'intérieur de l'élément optique. Pour arriver à une telle interface enterrée, le faisceau de mesure doit donc traverser d'autres interfaces de l'élément optique.

Par « zone de cohérence », on entend la zone dans laquelle des interférences entre le faisceau de mesure et un faisceau de référence peuvent se former sur le capteur. La zone de cohérence peut être déplacée en variant la différence de la longueur du chemin optique entre les deux faisceaux, par exemple en modifiant la longueur optique d'un des faisceaux ou des deux. Lorsque la zone de cohérence se trouve au niveau d'une interface, des signaux d'interférences entre le faisceau de mesure réfléchi par cette interface et le faisceau de référence peuvent être acquis.

Le dispositif selon l'invention permet de détecter sélectivement un signal d'interférence pour chaque interface au niveau de laquelle la zone de cohérence est positionnée, c'est-à-dire pour chaque surface se trouvant dans la zone de cohérence. En effet, la longueur de cohérence de la source lumineuse est ajustée de sorte à être plus courte qu'une distance optique minimale entre deux interfaces adjacentes de l'élément optique. Ainsi, pour chaque mesure, une seule interface se trouve dans la zone de cohérence, et donc, un signal d'interférence acquis ne comprend que la contribution d'une seule interface, ou ne provient que d'une seule interface.

Les mesures des interférences sont effectuées selon un champ de vue déterminé par les moyens de mesure du dispositif. Les mesures peuvent ainsi être réalisées soit en plein champ, soit par balayage du champ de vue.

Des moyens numériques de traitement du dispositif selon l'invention sont configurés pour produire, à partir du signal d'interférence, une information de forme de l'interface mesurée selon le camp de vue.

Cette information de forme peut comprendre la forme optique et/ou la forme géométrique de l'interface à mesurer.

Cette information de forme peut également comprendre des distances optiques, ou géométriques, représentatives de la forme et/ou de la position de l'interface.

Les formes ou distances dites « optiques » sont les formes ou distances telles qu'elles sont « vues » par le faisceau de mesure. Les distances ou formes de surfaces géométriques s'en déduisent en prenant en compte l'indice de réfraction des milieux traversés par le faisceau de mesure.

En outre, lorsque le faisceau de mesure traverse des interfaces avant l'interface mesurée, le signal d'interférence est représentatif d'une forme ou d'une distance « apparente » dans la mesure où elle inclut la contribution de la ou des interfaces traversées, en particulier lorsque ces interfaces sont situées entre deux milieux d'indice de réfraction différent, et donc dévient ou modifient le faisceau de mesure par réfraction et/ou diffraction en fonction de leur forme. Il faut donc prendre en compte la forme de ces interfaces traversées, comme expliqué plus loin, pour obtenir la forme optique et/ou géométrique « réelle » de l'interface mesurée.

Le dispositif selon l'invention peut être mis en oeuvre, notamment, pour la mesure d'éléments optiques ou d'assemblages optiques lors de leur production, par exemple des objectifs formés de lentilles ou de microlentilles tels que des objectifs de smartphone ou pour l'industrie automobile.

Selon l'invention, les moyens de positionnement sont en outre configurés pour positionner relativement un plan objet conjugué d'un plan image du capteur interférométrique au niveau de l'interface à mesurer.

En effet, il est possible de faire varier la distance de focalisation du faisceau de mesure, et/ou la position de l'interface à mesurer relativement au faisceau de mesure, de sorte à acquérir des signaux interférométriques pour chaque interface avec le faisceau de mesure focalisé sur l'interface considérée. L'interface à mesurer est ainsi positionnée dans un plan objet conjugué du plan image du capteur interférométrique. Cela permet notamment d'optimiser la puissance optique recouplée dans le capteur. Aussi, en utilisant un élément collectant le faisceau de mesure réfléchi de l'interface avec une grande ouverture numérique, il est possible de mesurer des interfaces avec des pentes locales plus élevées. De ce fait, de meilleures mesures de forme des interfaces peuvent être obtenues. Par ailleurs, le positionnement de l'interface à mesurer dans le plan objet conjugué du plan image du capteur permet une reconstruction plus aisée de la surface à mesurer, en évitant notamment des aberrations optiques dues au défocus.

Selon l'invention, les moyens de mesure comprennent un capteur interférométrique, dit capteur interférométrique en mode point, configuré pour détecter un signal d'interférences ponctuel en un point du champ de vue.

Dans ce cas, une pluralité de signaux interférométriques est acquise en balayant l'ensemble du champ de vue selon une pluralité de points de mesure sur l'interface, afin d'obtenir des informations de forme sur toute l'interface.

En plus, les moyens de mesure comprennent un capteur interférométrique, dit capteur interférométrique en plein champ, configuré pour détecter un signal d'interférence en plein champ dans le champ de vue.

Dans ce cas, l'interface à mesurer peut être imagée selon le champ de vue en une seule mesure.

Selon un exemple, le dispositif peut comprendre un capteur interférométrique avec un interféromètre de Michelson.

Selon un autre exemple, le dispositif peut comprendre un capteur interférométrique avec un interféromètre de Mach-Zehnder.

Selon l'invention, les moyens de mesure comprennent un capteur interférométrique en mode point et un capteur interférométrique en plein champ.

Une telle combinaison de capteurs interférométriques permet d'améliorer et accélérer l'acquisition de signaux interférométriques. Il est ainsi par exemple possible de localiser rapidement la position optique des interfaces le long de l'axe optique de l'élément optique à mesurer avec le capteur en mode point, pour positionner efficacement un plan objet conjugué d'un plan image du capteur interférométrique en plein champ au niveau d'une interface à mesurer. Il est également possible de mesurer les positions des interfaces et/ou les épaisseurs des composants de l'élément optique ou des distances entre les interfaces en utilisant le capteur point, plus rapidement et/ou avec une meilleure précision qu'avec le capteur en plein champ, qui est par ailleurs utilisé pour la mesure de formes des interfaces.

Les moyens de positionnement peuvent être configurés pour positionner la zone de cohérence successivement au niveau de différentes interfaces de l'élément optique.

Ceci permet l'acquisition et le traitement de signaux interférométriques pour chaque interface de manière séquentielle et séparée, afin d'obtenir des informations de forme pour l'ensemble des interfaces de l'élément optique.

Le dispositif selon l'invention peut comprendre en outre des moyens de déplacement configurés pour déplacer l'élément optique dans un plan perpendiculaire au faisceau de mesure.

Ainsi, dans le cas d'un capteur interférométrique en mode point, par exemple, le champ de vue peut être balayé selon une pluralité de points de mesure.

De même, Ainsi, dans le cas d'un capteur interférométrique en plein champ, le champ de vue peut être balayé selon une pluralité de champs de vue partiels.

Suivant un autre aspect de l'invention, il est proposé un procédé de mesure, pour mesurer la forme d'une interface à mesurer d'un élément optique comprenant une pluralité d'interfaces, le procédé étant mis en oeuvre par un dispositif de mesure comprenant des moyens de mesure avec au moins un capteur interférométrique illuminé par une source à faible cohérence configuré pour diriger un faisceau de mesure vers l'élément optique de sorte à traverser ladite pluralité d'interfaces, et pour détecter sélectivement un signal d'interférence résultant d'interférences entre le faisceau de mesure réfléchi par ladite interface à mesurer et un faisceau de référence, le dispositif comprenant en outre des moyens de positionnement et des moyens numériques de traitement, caractérisé en ce que ledit procédé comprend les étapes suivantes :

- positionnement relatif, par les moyens de positionnement, d'une zone de cohérence du capteur interférométrique au niveau de l'interface à mesurer ;
- mesure de l'interface par les moyens de mesure, de sorte à produire un signal d'interférence ; et
- traitement du signal d'interférence par les moyens numériques de traitement, de sorte à obtenir une information de forme de ladite interface à mesurer selon un champ de vue.

Le procédé selon l'invention comprend en outre une étape de positionnement relatif d'un plan objet conjugué d'un plan image du capteur interférométrique au niveau de l'interface à mesurer.

Au moins l'étape de positionnement de la zone de cohérence et l'étape de mesure peuvent être mises en oeuvre de manière séquentielle, ou successivement, pour la mesure de forme de différentes interfaces à mesurer de la pluralité d'interfaces.

De même, l'étape de positionnement relatif d'un plan objet conjugué d'un plan image du capteur interférométrique au niveau d'une interface peut être mise en oeuvre de manière séquentielle, ou successivement, pour la mesure de forme de différentes interfaces à mesurer de la pluralité d'interfaces.

Ainsi, l'ensemble des interfaces d'un élément optique peuvent être mesurées, par exemple, en commençant par l'interface supérieure et en terminant par l'interface inférieure, en passant par toutes les interfaces intermédiaires « enterrées », sans qu'il soit nécessaire de retourner ou manipuler l'élément optique.

Le traitement des signaux interférométriques acquis pour les interfaces successives peut être réalisé séquentiellement, entre des mesures sur les différentes interfaces, ou une fois tous les signaux d'interférences, pour toutes les interfaces, acquis.

Selon un mode de réalisation nullement limitatif, l'étape de traitement du signal d'interférence comprend une analyse par profilométrie d'une pluralité de d'interférogrammes acquis pour une même interface à mesurer.

La profilométrie est basée sur le traitement de séquences d'interférogrammes acquis pour une pluralité de différences de trajets optiques dans le capteur interférométrique, et qui constituent le signal d'interférence. Ces séquences peuvent être acquises de différentes manières selon la technique d'analyse mise en oeuvre.

La pluralité d'interférogrammes peut notamment être acquise selon une méthode interférométrique par décalage de phase.

Dans ce cas, pour chaque interface de l'élément optique, une pluralité d'interférogrammes est acquise pour une pluralité de valeurs de différence de trajets optiques ou de phases entre les faisceaux de mesure et de référence, dans une gamme de différences de trajets optiques inférieure à la longueur de cohérence de la source lumineuse. On détermine ensuite la phase et éventuellement l'amplitude de l'interférogramme en tout point du champ de vue en appliquant un algorithme connu, tel que l'algorithme de Carré, à une succession de valeurs d'interférences obtenues respectivement aux points de ce champ de vue pour les différentes valeurs de différences de trajets optiques.

La pluralité d'interférogrammes peut également être acquise selon une méthode interférométriques par balayage vertical.

Dans ce cas, pour chaque interface, une pluralité d'interférogrammes est acquise pour une pluralité de valeurs de différence de trajets optiques ou de phases entre les faisceaux de mesure et de référence, dans une gamme de différences de trajets optiques s'étendant, de préférence, au-delà de la longueur de cohérence de la source lumineuse. On détermine ensuite, en chaque point du champ de vue, la valeur de différence de trajet optique pour laquelle la différence de marche entre le faisceau de mesure réfléchi sur l'interface et le faisceau de référence est nulle. Pour cela, on peut détecter par exemple le maximum d'amplitude de l'enveloppe de l'interférogramme, ou la position où la phase de l'interférogramme s'annule, au point considéré.

Selon un autre mode de réalisation nullement limitatif, l'étape de traitement du signal d'interférence peut mettre en oeuvre un procédé de calcul par holographie numérique.

Un signal d'interférence ou interférogramme est enregistré. Puis une méthode d'holographie numérique est utilisée pour reconstruire l'interface considérée numériquement, en simulant le processus d'illumination de l'interférogramme sur le détecteur avec une onde de référence numérique. Une telle méthode a l'avantage de ne nécessiter qu'une seule image ou acquisition de signal d'interférence pour calculer la forme d'une surface optique.

De manière avantageuse, l'étape de traitement du signal d'interférence peut comprendre en outre une étape de correction prenant en compte une information de forme des interfaces traversées par le faisceau de mesure, pour obtenir une information de forme optique et/ou de forme géométrique de l'interface à mesurer.

En effet, comme expliqué précédemment, lors de la mesure de surfaces ou interfaces « enterrées » dans l'élément optique, les formes optiques mesurées peuvent également dépendre des milieux et des formes des interfaces traversées par le faisceau de mesure avant d'atteindre ces surfaces enterrées, notamment dû à des modifications de fronts d'ondes et des aberrations introduites. Dans ce cas, une correction doit être appliquée pour déterminer les formes optiques ou géométriques réelles des interfaces.

Pour effectuer cette correction, il est possible d'utiliser un modèle de propagation de la lumière et des connaissances a priori ou acquises lors de mesures précédentes sur l'élément optique, telles que des indices de réfraction de matériaux et des positions et des formes d'interfaces traversées.

Le procédé selon l'invention peut être mis en oeuvre pour mesurer les formes et/ou les positions des interfaces d'un élément optique sous la forme d'un assemblage optique avec des lentilles, tel qu'un objectif de smartphone, les interfaces comprenant les surfaces des lentilles.

## Description des figures et modes de réalisation

D'autres avantages et caractéristiques apparaîtront à l'examen de la description détaillée d'exemples nullement limitatifs, et des dessins annexés sur lesquels :

- la Figure 1a est une représentation schématique de principe d'un dispositif de mesure selon la présente invention ;
- la Figure 1b est une représentation schématique d'un exemple d'un élément optique à mesurer, notamment en mettant en oeuvre le dispositif de l'invention ;
- la Figure 2 est une représentation schématique d'un premier exemple de dispositif interférométrique pouvant être mis en oeuvre dans le cadre de la présente invention ;
- la Figure 3 est une représentation schématique d'un deuxième exemple de dispositif interférométrique pouvant être mis en oeuvre dans le cadre de la présente invention ;
- la Figure 4 est une représentation schématique d'un troisième exemple de dispositif interférométrique pouvant être mis en oeuvre dans le cadre de la présente invention ;
- la Figure 5 est une représentation schématique d'un quatrième exemple de dispositif interférométrique pouvant être mis en oeuvre dans le cadre de la présente invention ;
- la Figure 6 est une représentation schématique d'un exemple de réalisation non limitatif d'un procédé de mesure selon la présente invention ; et
- la Figure 7 est un exemple de mesure d'un objet à mesurer obtenue avec la présente invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

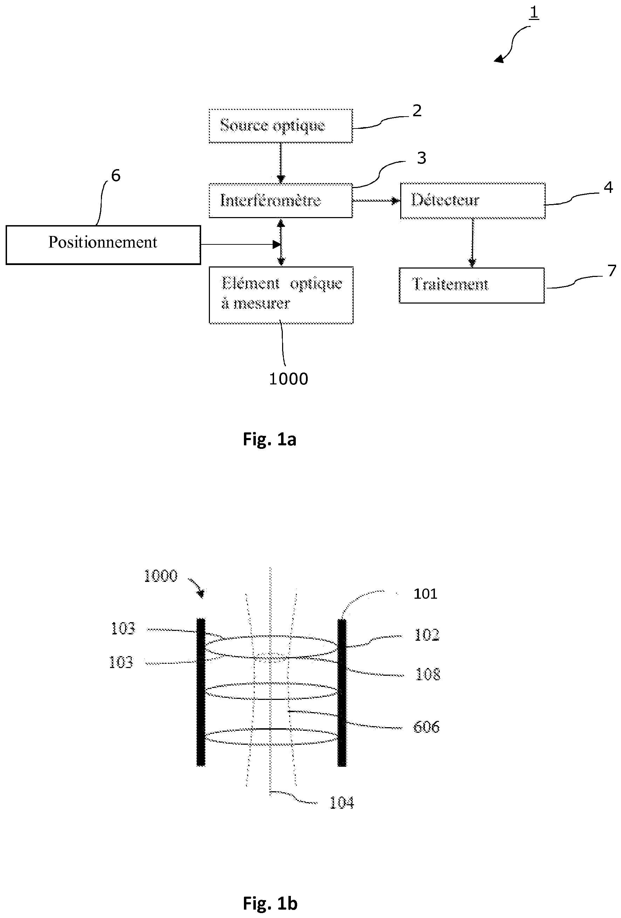

La Figure 1a est une représentation schématique pour visualiser le principe de la présente invention.

Un dispositif de mesure 1 est agencé pour effectuer des mesures de forme d'une interface à mesurer d'un élément optique 1000 ayant plusieurs interfaces.

Le dispositif 1 comprend une source lumineuse 2, un interféromètre 3 et un détecteur 4. L'interféromètre 3 et le détecteur 4 peuvent former un capteur interférométrique. La source 2 est une source à faible cohérence, configuré pour diriger un faisceau de mesure vers l'élément optique de sorte à traverser les interfaces. L'interféromètre 3 est configuré pour produire un signal d'interférence provenant de l'interférence entre le faisceau de mesure réfléchi par l'interface à mesurer et un faisceau de référence. Le signal d'interférence est détecté par le détecteur 4. Ce signal d'interférence contient une mesure de forme optique de l'interface de laquelle le faisceau ce mesure est réfléchi. Un ou plusieurs signaux d'interférence sont ainsi acquis selon un champ de vue sur l'interface.

Le dispositif 1 comprend également des moyens de positionnement 6 pour positionner relativement une zone de cohérence de l'interféromètre au niveau de l'interface à mesurer de l'objet 1000.

Le dispositif 1 comprend en outre des moyens numériques de traitement 7. Ces moyens de traitement 7 sont configurés pour produire, à partir du signal d'interférence mesuré, une information de forme de l'interface à mesurer selon un champ de vue. Ces moyens de traitement 7 comprennent au moins un ordinateur, une unité centrale ou de calcul, un microprocesseur, et/ou des moyens logiciels adaptés.

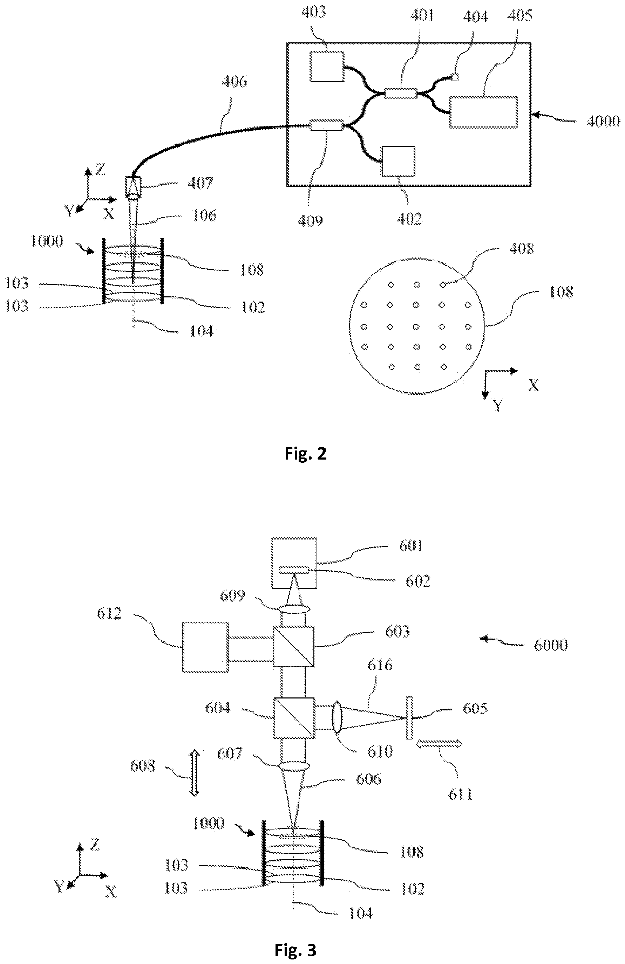

La Figure 1b est une représentation schématique d'un élément optique à mesurer dans le cadre de la présente invention. L'élément optique 1000 de type objectif de caméra est constitué d'un barillet 101 dans lequel sont positionnées des lentilles 102. Les lentilles 102, alignées selon un axe optique 104, ont des surfaces ou des interfaces 103. Le dispositif 1 selon la présente invention est agencé pour obtenir une information de forme de ces surfaces ou interfaces 103, selon un champ de vue 108 autour de l'axe optique 104. La Figure 2 illustre également un faisceau de mesure 606 issu du dispositif de mesure 1.

Pour obtenir une mesure optique d'une interface, le dispositif selon l'invention met en oeuvre différentes techniques d'interférométrie. Le dispositif comprend notamment un interféromètre à faible cohérence fonctionnant en mode point, et un interféromètre à faible cohérence plein champ.

La Figure 2 est une représentation schématique d'un exemple de dispositif interférométrique pouvant être mis en oeuvre dans le cadre de la présente invention.

L'interféromètre 4000, représenté sur la Figure 2, est un interféromètre à faible cohérence dans le domaine temporel.

L'interféromètre 4000 peut fonctionner, par exemple, dans l'infrarouge. Pour mesurer des assemblages optiques avec des traitements antireflets, il peut être avantageux de choisir pour l'interféromètre une longueur d'onde de travail différente de celles pour lesquels les traitements antireflets sont optimisés, auquel cas ils peuvent présenter une réflectivité élevée. Ainsi, un interféromètre fonctionnant dans l'infrarouge convient bien pour faire des mesures d'assemblages optiques destinés à être utilisés dans des longueurs d'ondes visibles.

L'interféromètre 4000 fonctionne en mode point, c'est-à-dire qu'il ne permet d'acquérir qu'un seul point 408 à la fois d'un champ de vue 108 des surfaces ou des interfaces de l'élément optique 1000 à mesurer.

Dans le mode de réalisation illustré sur la Figure 2, l'interféromètre 4000 comprend un double interféromètre de Michelson à base de fibres optiques monomodes. Le double interféromètre est illuminé par une source de lumière fibrée 402. La source de lumière 402 peut être une diode superluminescente (en Anglais : Super Luminescente Diode, SLD) dont la longueur d'onde centrale est, par exemple, de l'ordre de 1300 nm à 1350 nm et la largeur spectrale de l'ordre de 60 nm. Le choix de cette longueur d'onde correspond notamment à des critères de disponibilité des composants.

La lumière issue de la source 402 est dirigée au travers d'un coupleur à fibres 409 et d'une fibre 406 vers un collimateur 407, pour constituer le faisceau de mesure ponctuel 106. Une partie du faisceau est réfléchie dans la fibre 406 au niveau du collimateur 407, par exemple à l'interface silice-air ou verre-air constituant l'extrémité de la fibre, pour constituer une onde de référence.

Les rétroréflexions issues, par exemple, des interfaces 103 de l'élément optique 1000, sont couplées dans la fibre 406 et dirigées avec l'onde de référence vers un interféromètre de décodage construit autour d'un coupleur à fibres 401. Cet interféromètre de décodage a une fonction de corrélateur optique dont les deux bras sont, respectivement, une référence fixe 404 et une ligne à retard temporelle 405. Les signaux réfléchis au niveau de la référence 404 et de la ligne à retard 405 sont combinés, au travers du coupleur 401, sur un détecteur 403 qui est une photodiode. La fonction de la ligne à retard 405 est d'introduire un retard optique entre les ondes incidentes et réfléchies, variable au cours du temps d'une manière connue, obtenu par exemple par le déplacement d'un miroir.

La longueur des bras de l'interféromètre de décodage est ajustée de telle sorte à permettre de reproduire avec la ligne à retard 405 les différences de trajets optiques entre l'onde de référence réfléchie au niveau du collimateur 407 et les rétroréflexions issues des interfaces de l'élément optique 1000, auquel cas on obtient au niveau du détecteur 403 un interférogramme dont la forme et la largeur dépendent des caractéristiques spectrales de la source 402, et en particulier de sa longueur de cohérence optique.

Ainsi, la zone de mesure de l'interféromètre 4000, relativement au collimateur 407 ou à l'interface du collimateur qui génère l'onde de référence, est déterminée par la différence de longueur optique entre les bras de l'interféromètre de décodage, et par la course maximale de la ligne à retard 405. Cette zone de mesure correspond à une zone de cohérence dans laquelle l'interface à mesurer 103 doit se trouver.

Pour obtenir les formes optiques des interfaces 103, le champ de vue 108 peut être balayé selon une pluralité de points de mesure 408 à différentes positions (X, Y). Pour cela, le dispositif de mesure peut comprendre, par exemple, une table de translation pour déplacer l'élément à mesurer 1000 relativement au collimateur 407.

Le champ de vue 108 atteignable pour les différentes interfaces 103 dépend notamment de l'ouverture numérique du collimateur 407 et des courbures des surfaces. En effet, pour obtenir une mesure, il faut que la réflexion spéculaire du faisceau de mesure 106 sur l'interface 103 soit recouplée dans le collimateur 407 et l'interféromètre 4000.

La Figure 3 est une représentation schématique d'un autre exemple de dispositif interférométrique pouvant être mis en oeuvre dans le cadre de la présente invention.

L'interféromètre 6000, représenté sur la Figure 3, est un interféromètre à faible cohérence plein champ.

Le dispositif 6000 est basé sur un interféromètre de Michelson ou de Linnik formé par un élément séparateur 604, sous la forme d'un cube ou d'une lame séparatrice, avec un bras de mesure qui dirige un faisceau de mesure 606 vers l'élément optique à mesurer 1000, et un bras de référence avec un miroir 605 pour former un faisceau de référence 616.

L'interféromètre 6000 est illuminé par une source 612 à faible cohérence par l'intermédiaire d'un élément séparateur d'éclairage 603 sous la forme d'un cube ou d'une lame séparatrice. La source 612 peut comprendre, par exemple, une diode superluminescente (SLD), une diode, une source de lumière thermique (lampe halogène, etc.) ou une source supercontinuum. La source 612 peut également comprendre un dispositif de filtrage, par exemple avec un réseau et une fente, ou des filtres interférentiels, pour ajuster la longueur de cohérence à quelques dizaines ou quelques centaines de microns. La source 612 peut être agencée pour émettre dans des longueurs d'ondes visibles ou proche infrarouge, autour d'une ou plusieurs longueurs d'ondes.

Bien entendu, les éléments séparateurs 603, 604 peuvent être non polarisants, ou polarisants et associés à des lames quart-d'ondes pour faire des coupleurs sans pertes.

Les faisceaux de mesure 606 et de référence 616, réfléchis respectivement dans les deux bras de l'interféromètre, sont dirigés par l'intermédiaire de la lame séparatrice d'éclairage 603 vers une caméra 601 avec un capteur 602 comprenant une matrice de détection, par exemple de type CMOS ou CCD.

Lorsque la différence de trajets optiques entre les faisceaux de mesure 606 et de référence 616 est inférieure à la longueur de cohérence de la source 612, on obtient des interférences sur le détecteur 602.

Le dispositif 6000, tel que représenté sur la Figure 3, comprend également une lentille ou un objectif de focalisation 607, et une lentille de tube 609, agencées de sorte à définir un plan objet conjugué d'un plan image formé sur le capteur 602. Le bras de référence comprend en outre un objectif 610 qui définit également, avec la lentille de tube 609, un plan objet de référence conjugué du plan image du capteur 602.

Le dispositif 6000 est un dispositif imageur plein champ, qui permet d'imager des interfaces 103 de l'élément optique 1000 selon un champ de vue 108 qui est déterminé par le champ de vue du système d'imagerie et par son ouverture numérique au niveau de l'objectif de focalisation 607. En effet, pour obtenir une mesure, il faut que la réflexion spéculaire du faisceau de mesure 606 sur les interfaces 103 soit recouplée dans le système d'imagerie.

De manière habituelle, le dispositif 6000 comprend des éléments optiques pour focaliser le faisceau d'illumination dans le plan focal arrière de l'objectif de focalisation 607 et de l'objectif 610 du bras de référence. Les faisceaux d'illumination ne sont pas représentés sur la figure pour des raisons de clarté.

Le dispositif 6000 comprend également un premier moyen de déplacement 611 pour faire varier la longueur du bras de référence, par exemple sous la forme d'une platine de translation 611 déplaçant le miroir de référence 605. L'objectif 610 du bras de référence peut également être ajustable pour maintenir le miroir de référence 605 dans un plan objet conjugué du plan image formé par le capteur 602.

Le dispositif 6000 comprend également un deuxième moyen de déplacement 608 dont la fonction est de déplacer le plan objet conjugué du plan image formé par le capteur 602, de sorte par exemple à imager séquentiellement les interfaces 103 successives sur le capteur 602. Ce moyen de déplacement 608 peut comprendre un système pour déplacer l'objectif de focalisation 607 ou des lentilles de cet objectif, par exemple avec un dispositif de translation linéaire ou hélicoïdal. Alternativement ou en plus, ce moyen de déplacement 608 peut comprendre un dispositif ou une platine de translation pour déplacer le dispositif 6000 relativement à l'élément optique 1000, ou inversement.

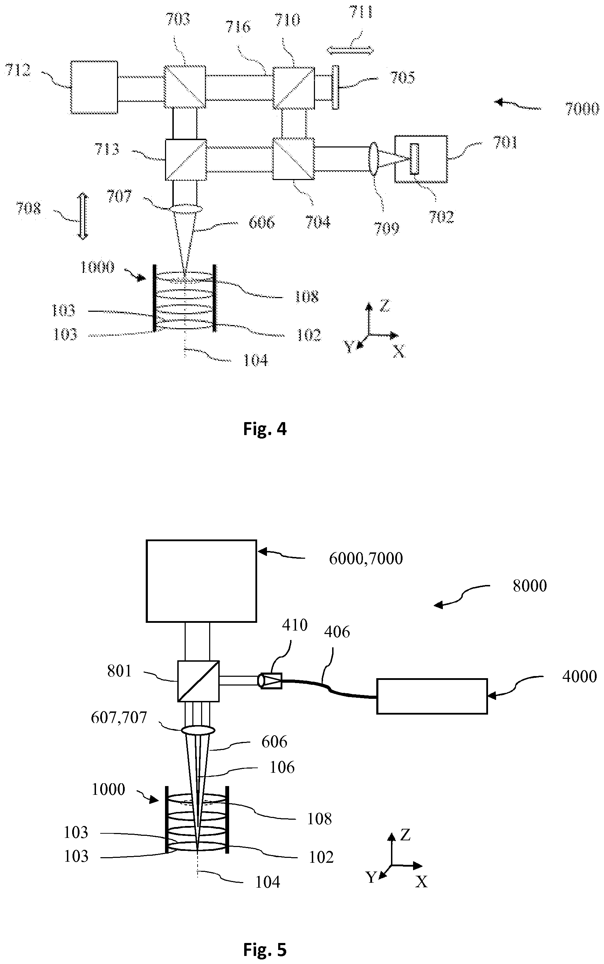

La Figure 4 est une représentation schématique d'un autre exemple de dispositif interférométrique pouvant être mis en oeuvre dans le cadre de la présente invention.

Le dispositif 7000 est basé sur un interféromètre de Mach-Zehnder, avec un bras de mesure qui dirige un faisceau de mesure 606 vers l'élément optique à mesurer 1000, et un bras de référence dans lequel se propage un faisceau de référence 716.

L'interféromètre 7000 est illuminé par une source 712 à faible cohérence. La source 712 peut comprendre, par exemple, une diode superluminescente (SLD), une diode, une source de lumière thermique (lampe halogène, etc.) ou une source supercontinuum. La source 712 peut également comprendre un dispositif de filtrage, par exemple avec un réseau et une fente, ou des filtres interférentiels, pour ajuster la longueur de cohérence à quelques dizaines ou quelques centaines de microns. La source 712 peut être agencée pour émettre dans des longueurs d'ondes visible ou proche infrarouge, autour d'une ou plusieurs longueurs d'ondes.

La lumière de la source 712 est séparée en un faisceau de mesure 606 et un faisceau de référence 716 par un premier élément séparateur 703 sous la forme d'un cube ou d'une lame séparatrice.

L'interféromètre 7000 comprend un deuxième élément séparateur 713 dans le bras de mesure, sous la forme d'un cube ou d'une lame séparatrice, pour diriger le faisceau de mesure 606 vers l'élément à mesurer 1000, et transmettre la lumière réfléchie dans cet élément.

Dans le mode de réalisation présenté sur la Figure 4, le dispositif 7000 comprend également, dans le bras de référence, un élément d'ajustage pour diriger et faire varier la longueur du trajet optique du bras de référence. Cet élément peut être réalisé, par exemple et de manière non limitative, avec un élément séparateur sous la forme d'un cube ou d'une lame séparatrice 710 et un miroir de référence 705 déplaçable en translation par des moyens de translation 711 tels qu'une platine de translation.

Les faisceaux de mesure 606 et de référence 716 sont combinés par l'intermédiaire d'un élément séparateur 704, sous la forme d'un cube ou d'une lame séparatrice, et dirigés vers une caméra 701 avec un capteur 702 comprenant une matrice de détection, par exemple de type CMOS ou CCD.

Bien entendu, l'interféromètre de Mach-Zehnder peut être réalisé avec des éléments non polarisants, ou polarisants et associés à des lames quart d'ondes pour faire des coupleurs sans pertes. Il peut également être réalisé, au moins partiellement, avec des fibres optiques.

Lorsque la différence de trajets optiques entre les faisceaux de mesure 606 et de référence 716 est inférieure à la longueur de cohérence de la source 712, on obtient des interférences sur le détecteur 702.

Le dispositif 7000 comprend également une lentille ou un objectif de focalisation 707, et une lentille de tube 709, agencées de sorte à définir un plan objet conjugué d'un plan image formé sur le capteur 702.

Le dispositif 7000 est également un dispositif imageur plein champ, qui permet d'imager des interfaces 103 de l'élément optique 1000 selon un champ de vue 108 qui est déterminé par le champ de vue du système d'imagerie et par son ouverture numérique au niveau de l'objectif de focalisation 707. En effet, pour obtenir une mesure, il faut que la réflexion spéculaire du faisceau de mesure 606 sur les interfaces 103 soit recouplée dans le système d'imagerie.

De manière habituelle, le dispositif 7000 comprend des éléments optiques pour focaliser le faisceau d'illumination dans le plan focal arrière de l'objectif de focalisation 707. Les faisceaux d'illumination ne sont pas représentés sur la figure pour des raisons de clarté.

Le dispositif 7000 comprend également un moyen de déplacement 708 dont la fonction est de déplacer le plan objet conjugué du plan image formé par le capteur 702, de sorte par exemple à imager séquentiellement les interfaces 103 successives sur le capteur 702. Ce moyen de déplacement 708 peut comprendre un système pour déplacer l'objectif de focalisation 707 ou des lentilles de cet objectif, par exemple avec un dispositif de translation linéaire ou hélicoïdal. Alternativement ou en plus, ce moyen de déplacement 708 peut comprendre un dispositif ou une platine de translation pour déplacer le dispositif 7000 relativement à l'élément optique 1000, ou inversement.

Il est à noter que, dans un exemple non-revendiqué, les interféromètres 6000, 7000 tels que représentés sur les Figures 3 et 4 peuvent également être réalisés avec un détecteur 601, 701 ponctuel, permettant de n'acquérir qu'un seul point de mesure du champ de vue 108 à la fois. Dans ce cas, il est nécessaire de balayer le champ de vue 108 en X, Y, tel que décrit pour le dispositif 4000 selon le mode de réalisation de la Figure 2.

La Figure 5 est une représentation schématique d'un autre exemple de dispositif interférométrique pouvant être mis en oeuvre dans le cadre de la présente invention.

Le dispositif interférométrique 8000 selon l'exemple de la Figure 5 est une combinaison d'un interféromètre plein champ 6000, 7000 tel que représenté sur les Figures 3 et 4, et un interféromètre en mode point 4000 tel que représenté sur la Figure 2.

Le dispositif 8000 comprend également un élément optique de couplage 801 pour coupler le faisceau de mesure ponctuel 106 de l'interféromètre en mode point 4000, mis en forme par un premier collimateur 410, avec le faisceau de mesure 606 de l'interféromètre à plein champ 6000, 7000. L'élément de couplage 801 est agencé de sorte à permettre un positionnement relatif précis des faisceaux, et de préférence fixe, selon des directions de propagation parallèles ou confondues. L'élément de couplage 801 peut comprendre une lame ou un cube semi-réfléchissant, polarisant ou non. Il peut également comprendre un miroir dichroïque, par exemple pour coupler un faisceau de mesure ponctuel 106 dans l'infrarouge avec un faisceau de mesure en plein champ 606 dans des longueurs d'ondes visibles.

Le faisceau de mesure ponctuel 106 est, de préférence, positionné sur l'axe optique 104 de l'élément optique à mesurer 1000. Pour cela, l'élément à mesurer 1000 et les faisceaux de mesure 106, 606 peuvent être déplacés relativement l'un à l'autre, par exemple avec une table de translation dans le plan X, Y. La caméra de l'interféromètre plein champ 6000, 7000 peut être utilisée pour contrôler ou visualiser ce déplacement, et localiser l'axe optique par exemple en recherchant des symétries dans l'image ou dans des mesures de formes d'interfaces.

Le positionnement des faisceaux 106, 606 sur l'axe optique peut également être ajusté à partir de mesures effectuées avec l'interféromètre en mode point 4000. En effet, un positionnement sur l'axe optique est la seule position pour laquelle un faisceau incident en mode point est perpendiculaire à toutes les interfaces, et donc produit des mesures, notamment pour un élément optique 1000 avec des lentilles réfractives.

Cela permet également, à l'inverse, de localiser l'axe optique de cette manière.

Avec les dispositifs interférométriques 4000, 6000 ou 7000, lorsqu'une surface ou une interface 103 apparaît dans la zone de cohérence, on obtient sur le détecteur une structure d'interférences résultant des interférences entre faisceaux de mesure et de référence pour le champ de vue 108.

Pour en déduire les formes de surfaces, ou au moins de surfaces optiques apparentes, plusieurs méthodes connues peuvent être utilisées, comme décrit ci-après.

Le dispositif 1 selon le mode de réalisation représenté sur la Figure 1, comprenant un interféromètre selon l'un des modes de réalisation représentés sur les Figures 2, 3 et 4, peut être utilisé pour mettre en oeuvre les étapes du procédé selon l'invention qui seront décrites par la suite.

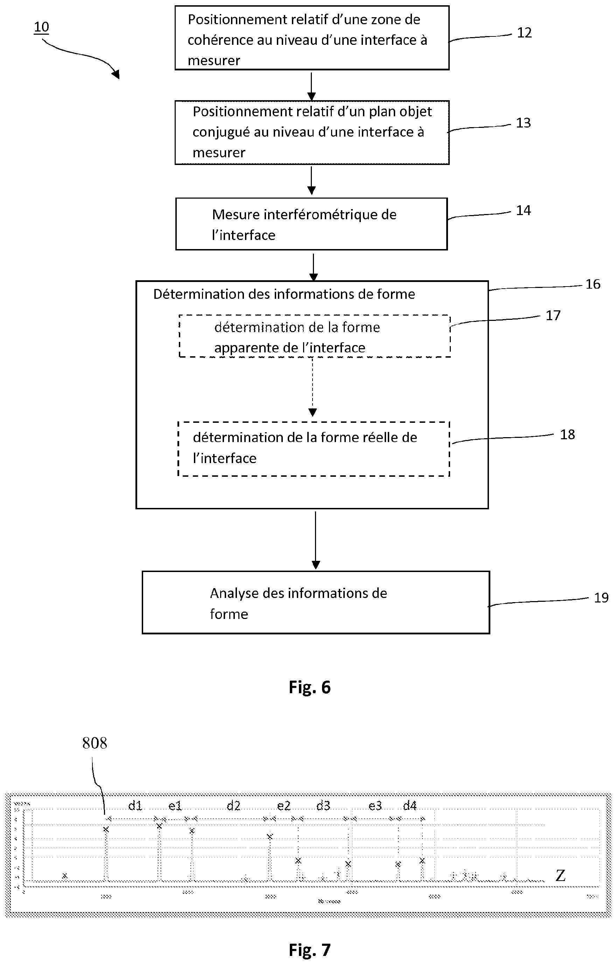

La Figure 6 est une représentation schématique d'un exemple de réalisation non limitatif d'un procédé de mesure selon l'invention.

Le procédé 10, représenté sur la Figure 6, comprend une étape 12 de positionnement relatif d'une zone de cohérence au niveau d'une interface à mesurer 103 d'un élément optique 1000.

Si la profondeur de champ de l'objectif de focalisation 407, 607, 707 est suffisante pour obtenir un signal de toutes les interfaces 103 de l'élément à mesurer, en modifiant la longueur optique du bras de référence, par exemple en déplaçant le miroir de référence 605, 705 ou en variant la longueur de la ligne à retard 405, on déplace la zone de cohérence dans laquelle des interférences entre faisceaux de mesure 106, 606 et de référence 616, 716 peuvent se former sur le détecteur 602, 702, 403 le long de l'axe optique 104. Lorsque cette zone de cohérence traverse une interface 103, on peut acquérir des signaux d'interférences en tous points du champ de vue mesurable 108.

Selon le mode de réalisation représenté sur la Figure 6, le procédé 10 comprend également une étape 13 de positionnement relatif d'un plan objet conjugué du plan image sur le capteur 602, 702 au niveau de l'interface à mesurer 103.

En effet, il est préférable de positionner l'interface 103 à mesurer dans un plan objet conjugué du plan image situé sur le capteur 602, 702 ou dans le collimateur 407 à l'extrémité de la fibre optique 406, en variant la distance de focalisation du faisceau de mesure. Cela permet d'optimiser la puissance recouplée dans le système d'imagerie et de mesurer l'interface selon un champ de vue 108 avec des pentes locales plus importantes, grâce à une meilleure exploitation de l'ouverture numérique du collimateur 407 ou de l'objectif de focalisation 607, 707.

Dans les exemples d'interféromètres représentés sur les Figures 2, 3 et 4, le déplacement de la zone de cohérence et le déplacement du plan objet sont effectués de la manière suivante.

Le déplacement de la zone de cohérence le long de l'axe optique 104 est effectué, par exemple, en déplaçant le miroir de référence 605, 705. Un déplacement, en distance optique, du miroir de référence engendre un déplacement identique, également en distances optiques, de la zone de cohérence le long de l'axe optique 104. Il est rappelé que les distances optiques correspondent à aux distances géométriques multipliées par l'indice de réfraction des milieux traversés.

Le déplacement du plan objet, pour le positionner sur les interfaces successives, est effectué, par exemple, en variant la distance Z entre le collimateur 407 ou l'objectif de focalisation 607, 707 et l'élément optique à mesurer 1000, et/ou en variant la distance de focalisation du collimateur 407, de l'objectif de focalisation 607, 707 ou d'autres éléments optiques insérés dans le faisceau de mesure. La détection de la distance de focalisation optimale peut être effectuée en se basant, par exemple, sur un critère de maximum de puissance recouplée, ou de maximum de contraste d'image ou de franges d'interférences.

Il peut arriver qu'il ne soit pas possible de focaliser le faisceau de mesure 606 sur une interface particulière de l'élément à mesurer 1000. Cela dépend en particulier de la vergence ou de la puissance optique de du collimateur 407 ou de l'objectif de focalisation 607, 707 et des courbures des interfaces de l'élément optique 1000 traversées. Dans ce cas, il est possible de se placer sur un optimum de puissance recouplée. Toutefois, de manière générale, il est préférable d'utiliser un collimateur 407 ou un objectif de focalisation 607, 707 avec une vergence ou une puissance optique élevée devant la vergence des composants optiques de l'élément optique 1000 à mesurer (ou au moins plus élevée) et une grande ouverture numérique pour pouvoir mesurer les interfaces 103 dans de bonnes conditions.

Le déplacement à effectuer pour positionner le plan objet sur les interfaces successives dépend de la succession des milieux traversés par le faisceau de mesure 606 et des courbures des surfaces ou interfaces rencontrées. Il ne varie donc pas nécessairement linéairement avec un déplacement relatif de l'élément 1000 ou de la position théorique du plan objet dans le vide ou dans l'air (en l'absence de l'élément 1000).

Ces deux déplacements, de la zone de cohérence et du plan objet, doivent donc être effectués de manière coordonnée, le cas échéant, de sorte à superposer la zone de cohérence au plan objet considéré.

Dans le cas de la mise en oeuvre d'un interféromètre en mode point combiné à un interféromètre en plein champ comme illustré par exemple à la Figure 5, il est possible d'utiliser un faisceau de mesure ponctuel 106 avec une ouverture numérique faible, et donc avec une grande profondeur de champ, pour obtenir rapidement et très précisément la position (optique) de toutes les interfaces 103 le long de l'axe optique de l'élément à mesurer 1000. Il est à noter que pour cette mesure ponctuelle le long de l'axe optique il n'est pas nécessaire que les interfaces à mesurer soient dans un plan objet conjugué du plan image de l'interféromètre en mode point 4000.

Il est ainsi possible de mesurer séquentiellement les interfaces 103 avec l'interféromètre en plein champ 6000, 7000, en exploitant des mesures de position obtenues avec l'interféromètre en mode point 4000, de sorte à régler plus rapidement et plus efficacement cet interféromètre à plein champ pour chaque interface, en particulier pour positionner la zone de cohérence et le plan objet conjugué du plan image du détecteur.

Le réglage d'un tel dispositif combiné peut être réalisé comme suit :

- déterminer la position optique d'une interface 103 le long de l'axe optique en utilisant l'interféromètre en mode point 4000 ;
- régler la zone de cohérence de l'interféromètre plein champ 6000, 7000 autour de cette position optique ; et
- ajuster la position du plan objet de l'interféromètre plein champ 6000, 7000, par exemple avec l'objectif de focalisation.

Lors d'une étape 14 du procédé 10, l'interface de l'élément à mesurer, qui a été positionnée dans la zone de cohérence et, éventuellement, dans le plan objet lors des précédentes étapes 12, 13 comme détaillé ci-dessus, est mesurée au moyen du faisceau de mesure 106, 606.

La Figure 7 illustre un exemple d'un résultat de mesure interférométrique obtenue en mode point avec un interféromètre à faible cohérence tel qu'illustré à la Figure 2, pour un élément optique 1000 de type objectif de caméra formé par un empilement de quatre microlentilles 102 suivant un même axe optique 104, tel qu'illustré à la Figure 1b. Ces microlentilles possèdent des épaisseurs respectives d1, d2, d3 et d4 et sont séparées par des espacements e1, e2 et e3.

Plus particulièrement, la Figure 7 montre des pics 808 qui correspondent à des enveloppes d'interférogrammes obtenus pour l'ensemble des interfaces de l'élément optique 1000. Les pics sont représentatifs de réflexions du faisceau de mesure sur les interfaces. Les positions respectives des surfaces des microlentilles sont indiquées par des croix, les autres pics étant dus à des réflexions parasites. Cette mesure correspond à un point de mesure 408 du champ de vue 108, pour toutes les interfaces dans la direction Z de l'axe optique 104 de l'élément optique 1000 à mesurer. Cette mesure est effectuée sur l'axe optique 104.

Les grandeurs obtenues sont des distances optiques, dans la direction Z de l'axe optique 104, et comptées par rapport à une référence de position de l'interféromètre localisée par exemple par construction au niveau du collimateur 407 de l'interféromètre 4000 de la Figure 2, des interfaces 103 des différents composants ou lentilles 102, pour une position (X, Y) dans le champ de vue 108. Les mesures doivent être répétées pour tous les points (X, Y) du champ de vue pour obtenir une structure d'interférences pour tout le champ de vue, et pour toutes les interfaces 103 de l'élément optique.

Lorsque les mesures sont effectuées avec un interféromètre plein champ, tels qu'illustrés sur les Figures 3 et 4, on obtient directement sur le détecteur une structure d'interférences résultant des interférences entre faisceaux de mesure et de référence pour tout le champ de vue 108.

Pour obtenir des formes géométriques réelles des surfaces ou interfaces de l'élément optique, les formes optiques de celles-ci doivent être déterminées au préalable, et corrigées des effets de propagation comme décrit ci-dessous.

Lors d'une phase de traitement 16 du procédé 10, l'ensemble des signaux d'interférence pour une interface à mesurer sont traités numériquement afin d'en déduire une information de forme de cette interface.

Lors d'une première étape 17 du traitement, la forme optique de l'interface est déterminée. Cette forme optique est dite « apparente » car elle est affectée par les éventuelles interfaces traversées, comme décrit plus loin. Elle est déduite des mesures interférométriques.

Différentes méthodes connues peuvent être utilisées pour déterminer des formes optiques et/ou géométriques.

Selon un premier mode de réalisation, des méthodes profilométriques peuvent être utilisées pour réaliser l'étape 17. La profilométrie est basée sur le traitement de séquences d'interférogrammes.

Dans ce type de méthodes, les faisceaux de mesure et de référence sont ajustés, de préférence, de sorte à être incidents sur le détecteur avec des directions de propagation essentiellement parallèles ou confondues, ou faiblement inclinées, de sorte à produire des interférogrammes en teintes plates ou faiblement modulés.

Un premier exemple d'une telle méthode profilométrique met en oeuvre des algorithmes basés sur l'interférométrie par décalage de phase (« *phase stepping interferometry* » en anglais, PSI).

Pour cela, pour chaque interface i de l'élément optique, une pluralité d'interférogrammes (constituant le signal d'interférence) est acquise pour une pluralité de valeurs de différence de trajets optiques ou de phases entre les faisceaux de mesure et de référence, dans la limite de la longueur de cohérence de la source lumineuse.

Ensuite, la phase et éventuellement l'amplitude en tout point du champ de vue 108 du signal d'interférence ainsi constitué sont déterminées en appliquant un algorithme connu, tel que l'algorithme de Carré, à la succession d'interférogrammes obtenus au point considéré pour les différents déphasages, et en dépliant la phase ainsi obtenue modulo 2 pi.

On obtient ainsi un ensemble de valeurs de différences de phases mesurées $\varphi_{mi}(r_d)$ dans le plan du détecteur (ou plus précisément, de différences de phase entre les faisceaux de mesure et de référence sur le détecteur), $r_d$ étant un vecteur de coordonnées vers des points du plan du détecteur dans un système de référence (X, Y, Z).

On peut alors déterminer la forme optique $L_{mi}(r_d)$ de la surface i avec la relation classique :

$$L_{mi}(r_d) = \varphi_{mi}\lambda/4\pi, \qquad (1)$$

avec $\lambda$ la longueur d'onde centrale de la source dans le vide.

La forme géométrique $S_{mi}(r_d)$ peut être déduite de la forme optique par la relation :

$$S_{mi}(r_d) = L_{mi}(r_d)/n, \qquad (2)$$

où *n* est l'indice de réfraction de groupe du milieu dans lequel le faisceau de mesure est réfléchi.

Un deuxième exemple d'une méthode profilométrique met en oeuvre des algorithmes basés sur l'interférométrie par balayage vertical *(« vertical scan interferometry » en anglais, VSI)*.

Pour cela, pour chaque interface *i*, une pluralité d'interférogrammes (constituant le signal d'interférence) est acquise pour une pluralité de retards optiques entre les bras de mesure et de référence de l'interféromètre, dans une gamme de retards optiques s'étendant, de préférence, au-delà de la longueur de cohérence de la source lumineuse.

En chaque point $r_d$ du détecteur, le retard optique pour lequel la différence de trajets optiques entre le faisceau de mesure réfléchi sur l'interface i et le faisceau de référence est nulle est détecté. Pour cela, on peut détecter, par exemple, le maximum d'amplitude de l'enveloppe de l'interférogramme ou la position où la phase de l'interférogramme s'annule. On obtient ainsi directement la forme optique $L_{mi}(r_d)$ de la surface.

Selon un autre mode de réalisation de l'étape 17, une méthode d'holographie numérique peut être utilisée.

Dans une méthode d'holographie numérique, appelée également « interférométrie hors axe », les faisceaux de mesure et de référence sont ajustés, de préférence, de sorte à être incidents sur le détecteur avec des directions de propagation inclinées, ou formant un angle entre eux.

Lorsque le faisceau de mesure réfléchi par une interface i et le faisceau de référence ont une différence de trajets optiques ou un retard inférieur à la longueur de cohérence de la source lumineuse, on obtient sur le détecteur un signal d'interférence, ou interférogramme, $I_{mi}(r_d)$ dans lequel l'information de phase est encodée dans un réseau de franges dans la direction d'inclinaison des faisceaux.

L'interférogramme sur le détecteur peut être représenté par l'équation suivante :

$$I_{mi}(r_d) = |E_{mi}(r_d)|^2 + |E_R|^2 + E_R^* E_{mi}(r_d) + E_{mi}^*(r_d)E_R, \qquad (3)$$

avec $E_{mi}$ l'onde électromagnétique en notation complexe telle que réfléchie par l'interface i et incidente sur le détecteur (faisceau de mesure), $E_R$ l'onde électromagnétique de référence en notation complexe, supposée constante pour la simplicité, et * le conjugué complexe.

Les deux premiers termes correspondent à l'ordre zéro, les troisièmes et quatrièmes termes respectivement aux images réelles et virtuelles.

En choisissant un angle entre les faisceaux de mesure et de référence suffisamment élevé, ces différents termes ou ordres de diffraction sont séparés dans le domaine de Fourier et peuvent donc être filtrés.

Le terme correspondant à l'image réelle peut ainsi être obtenue par filtrage dans le domaine de Fourier par :

$$E_R^* E_{mi}(r_d) = FFT^{-1}\left(FFT\left(I_{mi}(r_d)\right)M\right), \qquad (4)$$

où FFT est la transformée de Fourier rapide et FFT$^{-1}$ son inverse. M est le filtre appliqué dans le domaine fréquentiel pour filtrer le terme correspondant à l'image réelle de sorte à conserver les fréquences spatiales présentes dans l'ouverture numérique de l'objectif de focalisation.

Une fois qu'on a obtenu le terme correspondant à l'image réelle $E_R^* E_{mi}(r_d)$, il est possible de l'illuminer numériquement avec une onde de référence numérique $E_{RD}$ correspondant à l'onde de référence utilisée, pour obtenir l'expression du champ électromagnétique recherché $E_{mi}(r_d)$ :

$$E_{mi}(r_d) = E_{RD} E_R^* E_{mi}(r_d). \qquad (5)$$

Il est à noter qu'en supposant l'onde de référence constante ou uniforme, cette étape peut également être réalisée dans le domaine de Fourier en translatant l'image filtrée en bande de base (autour de la fréquence nulle).

Il est ensuite possible de déterminer, en utilisant la phase $\varphi_{mi}(r_d)$ du champ électromagnétique $E_{mi}(r_d)$, la forme optique $L_{mi}(r_d)$ de la surface avec la relation (1), ainsi que la forme géométrique $S_{mi}(r_d)$ avec la relation (2).

La forme optique ou géométrique obtenue comme décrit précédemment est une forme telle que projetée sur le détecteur. Pour obtenir la forme optique ou géométrique réelle de l'interface, il faut encore prendre en compte l'effet du système optique entre l'interface et le détecteur.

Lorsque l'interface se trouve dans un plan objet conjugué du plan image du détecteur et en considérant un système optique parfait, il est possible d'utiliser le grandissement du système d'imagerie qui fait correspondre à un point $r_d$ du détecteur un point $r_i$ dans le plan objet conjugué, $r_i$ étant un vecteur de coordonnées vers des points du plan objet conjugué dans le système de référence (X, Y, Z). On obtient ainsi la forme optique $L_{mi}(r_i)$ ou géométrique $S_{mi}(r_i)$ de l'interface corrigée du système optique, avec le bon grandissement.

Selon un mode de réalisation, il est possible de prendre en compte les aberrations du système optique. Cela peut être fait par exemple par calibrage, en effectuant des mesures sur un miroir positionné à la place de l'élément optique 1000. On peut ainsi déterminer une forme optique résultant de ces aberrations, qui peut être soustraite de la forme optique mesurée. On peut ainsi également prendre en compte le profil de phase du faisceau de référence sur le détecteur. Ceci permet d'améliorer la précision de la mesure de forme réalisée par le procédé selon l'invention.

Suivant les méthodes d'acquisition et de traitement, en en particulier en mettant en oeuvre une technique d'holographie numérique comme décrit précédemment, il est possible d'obtenir une expression complète (avec l'amplitude et la phase) du champ électromagnétique $E_{mi}(r_d)$ au détecteur. Il est alors possible de propager le champ électromagnétique numériquement, par exemple vers un autre plan de reconstruction, avec des méthodes connues. Des méthodes utilisent notamment l'approximation de Fresnel, telles que par exemple l'approche par transformée de Fourier (Appl. Opt. 38, 6994-7001 (1999)), les spectres angulaires (Opt. Express 13, 9935-9940 (2005)) ou les convolutions (Meas. Sci. Technol. 13, R85-R101 (2002)).

Par exemple, dans le cas où le détecteur n'est pas exactement dans un plan image conjugué du plan objet d'une interface, on peut déterminer le champ électromagnétique $E_{mi}(r_d)$ dans le plan image en propageant numériquement le champ électromagnétique mesuré au détecteur jusqu'à ce plan.

De même, il est possible de déterminer plus rigoureusement la forme des interfaces en propageant le champ électromagnétique à partir du plan du détecteur jusqu'à l'interface considérée.

Pour mesurer les interfaces successives d'un élément optique 1000, par exemple avec les dispositifs 4000, 6000, 7000 décrits en relation avec les Figures 2, 3, 4 et 5, des mesures de phase $\varphi_{mi}(r_d)$ et/ou de forme optique $L_{mi}(r_d)$ sont acquises successivement pour les interfaces successives $i$ lors des étapes 12, 13 et 14 du procédé 10, en positionnant à chaque mesure la zone de cohérence et, éventuellement, le plan objet au niveau de l'interface $i$ mesurée.

Toutefois, les interfaces de l'élément optique 1000 traversées par le faisceau de mesure avant une interface $i$ considérée 103 modifient également la propagation du faisceau de mesure. Elles doivent donc être prises en compte pour obtenir une information de forme optique ou géométrique réelle de l'interface $i$.

Selon un mode de réalisation non limitatif et en référence à la Figure 6, la phase de traitement 16 du procédé 10 selon l'invention comprend une étape 18 de correction pour tenir compte des milieux traversés par le faisceau de mesure. Cette correction peut être appliquée sur les formes optiques ou géométriques obtenues à l'étape 17.

Selon un premier exemple, cette étape 18 de correction est réalisée par l'utilisation de modèles de propagation des ondes électromagnétiques au travers des différents matériaux et interfaces jusqu'à l'interface $i$ considérée, incluant tous les composants optiques de l'interféromètre et les interfaces de l'élément optique à mesurer 1000 traversées.

A titre d'illustration, on peut utiliser le modèle simple décrit ci-dessous. Ce modèle est valide dans l'approximation de Fresnel, en supposant une propagation des ondes électromagnétiques dans des milieux homogènes et au travers d'interfaces lisses ou spéculaires, sans modulation de l'amplitude. Il est donc notamment applicable pour la mesure d'éléments optiques avec des éléments ou des lentilles réfractives.

On suppose en outre que chaque interface 103 mesurée est positionnée dans un plan objet conjugué du plan image du détecteur par le système optique présent entre les deux. Cela permet d'obtenir sur le détecteur une image de l'interface avec une relation entre ces plans objets et image qui peut se modéliser par un simple grandissement G, comme expliqué précédemment. Cela implique de déplacer le plan objet relativement à l'élément optique à mesurer pour chaque mesure d'interfaces successives. La relation, et donc le grandissement, entre le plan image et le plan objet correspondant à chaque interface dépend des interfaces de l'élément optique traversées par le faisceau de mesure jusqu'à l'interface considérée. Toutefois, en pratique, dans la mesure où le grandissement est essentiellement déterminé par le système optique de l'interféromètre, tel que par exemple l'objectif de focalisation 607, 707 et la lentille de tube 609, 709, du fait de leur puissance optique élevée, on peut supposer un grandissement $G$ connu et identique entre le plan image et les plans objets positionnés au niveau des différentes interfaces.

On note $E_0(r_d)$ le champ électromagnétique du faisceau de mesure incident sur le détecteur tel que réfléchi par un élément de référence, comme un miroir plan.

Le champ électromagnétique $E_{mi}(r_d)$ réfléchi sur la première interface de l'élément optique à mesurer et incident sur le détecteur peut s'écrire

$$E_{m1}(r_d) = E_0(r_d)\exp[-i\varphi_{m1}(r_d)] \qquad (6)$$

où $\varphi_{m1}(r_d)$ est la phase due à la réflexion sur la première interface, telle que détectée par l'une des méthodes interférométriques décrites précédemment en positionnant la zone de cohérence et le plan objet conjugué du plan image du détecteur sur la première interface.

On peut en déduire, comme décrit précédemment, la forme optique de la première interface :

$$L_{m1}(r_d) = \varphi_{m1}(r_d)\lambda/4\pi. \qquad (7)$$

Le champ électromagnétique réfléchi sur la deuxième interface et incident sur le détecteur peut s'écrire, en négligeant les termes de propagation qui n'interviennent pas dans les calculs :

$$E_{m2}(r_d) = E_0(r_d)\exp[i\varphi_{m1}(r_d)]\exp[-i\varphi_{m2}(r_d)], \qquad (8)$$

où $\varphi_{m2}(r_d)$ est la phase due à la réflexion sur la deuxième interface, telle que détectée par l'une des méthodes interférométriques décrites précédemment en positionnant la zone de cohérence et le plan objet conjugué du plan image du détecteur sur la deuxième interface.

Le terme

$$\varphi'_{m2}(r_d) = \varphi_{m2}(r_d) - \varphi_{m1}(r_d) \qquad (9)$$

est la phase apparente, telle que mesurée, qui inclut des termes dépendant de l'interface mesurée et de l'interface précédente traversée par le faisceau de mesure pour atteindre l'interface mesurée. Dans la mesure où on connaît $\varphi_{mi}(r_d)$, déterminé précédemment, on peut donc déterminer $\varphi_{m2}(r_d)$.

A partir de $\varphi_{m2}(r_d)$, la forme optique corrigée, ou réelle, de la deuxième interface peut être déterminée comme suit :

$$L_{m2}(r_d) = \varphi_{m2}(r_d)\lambda/4\pi. \qquad (10)$$

Une fois qu'on a obtenu les formes et les positions optiques, on peut en déduire les formes géométriques en prenant en compte les indices de réfraction des différents matériaux, et le grandissement entre les plans image et objet.

Dans le cas de la mise en oeuvre d'un interféromètre en mode point tel qu'illustré sur la Figure 2, le déplacement du plan objet peut impliquer un déplacement relatif du collimateur 407 qui doit être pris en compte pour calculer les distances ou positions optiques des interfaces aux différents points de mesure 408 dans le champ de vue.

Selon un deuxième exemple, l'étape 18 de correction est réalisée en calculant une fonction d'étalement du point (« *Point Spread Fonction* » en Anglais, PSF) ou une fonction de transfert optique (dans le domaine de Fourier) du système optique traversé par le faisceau de mesure jusqu'à l'interface *i* considérée, incluant tous les composants optiques de l'interféromètre et les interfaces de l'élément optique à mesurer traversées.

L'étape 18 de correction peut être également réalisée en utilisant des informations de conception sur l'élément optique, lorsqu'elles sont disponibles. On peut par exemple utiliser des informations de conception, telles que les formes ou les courbures nominales d'interfaces, pour corriger l'effet des interfaces traversées par le faisceau de mesure en mettant en oeuvre par exemple l'un des modèles décrits précédemment. On peut ainsi par exemple valider la forme d'une interface dans un champ de vue avec une mesure, puis en utiliser la forme nominale complète (en particulier pour des formes asphériques ou « freeform ») pour corriger les mesures des interfaces suivantes. On peut également, par exemple, utiliser une forme d'interface nominale, mais positionnée le long de l'axe optique en fonction des mesures.

L'étape 18 de correction est réalisée séquentiellement, dans l'ordre des interfaces traversées de l'élément optique. Ainsi, pour chaque interface considérée, on dispose des formes optiques et/ou géométriques corrigées des interfaces précédentes traversées par le faisceau de mesure.

L'étape 18 de correction peut être réalisée selon différentes séquences.

Il est notamment possible d'acquérir ou de mesurer toutes les phases ou toutes les formes optiques apparentes (non corrigées) pour toutes les interfaces, puis de calculer les formes optiques et les formes géométriques corrigées dans une séquence ultérieure.

Il est également possible d'acquérir et de traiter séquentiellement les signaux interférométriques des différentes interfaces. Dans ce cas, il est possible d'utiliser la forme optique ou géométrique réelle (corrigée) des interfaces préalablement déterminées pour ajuster plus rapidement la focalisation du dispositif, et en particulier pour positionner plus efficacement le plan objet sur l'interface suivante.

Comme expliqué précédemment, les formes géométriques des interfaces et les épaisseurs des composants peuvent être déterminées à partir des formes et épaisseurs optiques en connaissant les matériaux de l'élément à mesurer ou au moins leurs indices de réfraction.

Selon un exemple, les positions et les formes géométriques réelles des interfaces peuvent être déterminées séquentiellement, pour chaque mesure d'interface. Cela peut permettre, par exemple, d'utiliser ces informations pour calculer la propagation de la lumière qui les traverse pour la mesure des interfaces suivantes.

Il est également possible de caractériser complètement l'élément optique à mesurer en termes de grandeurs optiques, sans connaissances a priori concernant les matériaux. On peut donc déterminer toutes les formes optiques et positions optiques d'interfaces corrigées des effets de propagation, puis calculer les formes et dimensions géométriques de l'élément optique dans une étape ultérieure.

Selon le mode de réalisation représenté sur la Figure 6, le procédé 10 comprend en outre une phase d'analyse 19 des informations de forme obtenues à la phase de traitement 16.

Selon un exemple, des inclinaisons et/ou des décentrements peuvent être déterminés pendant la phase d'analyse 19. Cette détermination peut être réalisée, par exemple, en déterminant ou estimant d'abord la position de l'axe optique de l'élément optique. L'axe optique peut être défini comme la droite passant au plus près des sommets ou apex (selon l'axe Z du système optique) de tout ou partie des surfaces ou interfaces mesurées.

Ensuite, il est possible de comparer le sommet apparent de l'interface considérée avec la position de l'axe optique global ou moyen de l'élément à mesurer déterminé auparavant, et/ou avec des positions d'axes optiques individuels apparents de composants optiques identifiés à partir de recherches d'axes de symétrie.

Selon un autre exemple, des composants optiques erronés ou hors spécifications dans un élément optique peuvent être identifiés pendant la phase d'analyse 19. Cette identification peut être réalisée, par exemple, en comparant des mesures de distances, d'épaisseurs ou de formes des surfaces avec des grandeurs de référence issues de la conception de l'élément optique. Des grandeurs non conformes, telles que des épaisseurs et/ou des formes de surface erronées, ou des composants mal positionnés le long de l'axe optique, ayant un espace entre les composants non conforme, peuvent ainsi être détectés.

Selon encore un autre exemple, des composants optiques ou des lentilles inclinés par rapport à l'axe optique peuvent être identifiés pendant la phase d'analyse 19. Cette identification peut être réalisée, par exemple, par des étapes de

- détection des sommets de toutes les interfaces, selon la direction de mesure Z ;
- calcul d'un axe optique moyen défini par une droite parallèle à la direction de mesure Z passant au plus près (par exemple, au sens des moindres carrés) des sommets, ou obtenir l'axe optique par tout autre moyen ; et

- détection des interfaces dont la position du sommet s'éloigne significativement (selon un critère prédéterminé) de l'axe optique. Ces interfaces correspondent à des composants décentrés ou inclinés.

Eventuellement, l'axe d'un composant reliant les sommets des interfaces du composant peut être déterminé. Cet axe local peut ensuite être comparé à l'axe optique de l'élément optique, pour en déterminer le décentrement (axe local parallèle à l'axe optique mais décalé) et/ou l'inclinaison (axe local incliné par rapport à l'axe optique).

Selon d'autres exemples, il est également possible de déterminer, pendant la phase d'analyse 19 à partir des informations de forme des interfaces :

- l'indice de réfraction des composants optiques (si on connaît leur épaisseur) ;
- l'épaisseur des composants optiques (si on connaît leur matériau ou leur indice de réfraction) ; et/ou
- la topographie des surfaces.

Bien sûr, l'invention n'est pas limitée aux exemples qui viennent d'être décrits et de nombreux aménagements peuvent être apportés à ces exemples sans sortir du cadre de l'invention.

**Revendications**

1. Dispositif (1) de mesure, pour mesurer la forme d'une interface (103) à mesurer d'un élément optique (1000) comprenant une pluralité d'interfaces, le dispositif (1) comprenant :

   - des moyens de mesure (4000, 6000, 7000) comprenant

     ◦ une première source (612, 712) à faible cohérence et un capteur interférométrique en plein champ illuminé par la première source (612, 712), et
     ◦ une deuxième source (402) à faible cohérence et un capteur interférométrique en mode point illuminé par la deuxième source (402),

   les moyens de mesure étant configurés pour diriger chacun des faisceaux de mesure (106, 606) des capteurs interférométriques vers l'élément optique (1000) de sorte à traverser ladite pluralité d'interfaces, et pour détecter sélectivement un signal d'interférence résultant d'interférences entre le faisceau de mesure (106, 606) réfléchi par ladite interface (103) à mesurer et un faisceau de référence (616, 716) du capteur interférométrique respectif ;
   - des moyens numériques de traitement configurés pour déterminer, à partir du signal d'interférence en mode point, la position optique d'une interface (103) de l'élément optique (1000) le long de l'axe optique (104) de l'élément optique (1000) ;
   - des moyens de positionnement (608, 611, 708, 711) configurés pour positionner relativement une zone de cohérence et un plan objet conjugué d'un plan image du capteur interférométrique en plein champ au niveau de l'interface à mesurer ;
   - les moyens numériques de traitement étant en outre configurés pour produire, à partir du signal d'interférence en plein champ, une information de forme de ladite interface (103) à mesurer selon un champ de vue (108).

2. Dispositif (1) selon la revendication 1, **caractérisé en ce que** l'information de forme comprend la forme optique et/ou la forme géométrique de l'interface (103) à mesurer.

3. Dispositif (1) selon l'une quelconque des revendications précédentes, **caractérisé en ce que** le capteur interférométrique en plein champ comprend un interféromètre de Michelson.

4. Dispositif (1) selon l'une quelconque des revendications 1 à 3, **caractérisé en ce que** le capteur interférométrique en plein champ comprend un interféromètre de Mach-Zehnder.

5. Dispositif (1) selon l'une quelconque des revendications précédentes, **caractérisé en ce que** les moyens de positionnement (608, 611, 708, 711) sont configurés pour positionner la zone de cohérence successivement au niveau de différentes interfaces (103) de l'élément optique (1000).

6. Dispositif (1) selon l'une quelconque des revendications précédentes, **caractérisé en ce qu'**il comprend en outre des moyens de déplacement configurés pour déplacer l'élément optique dans un plan perpendiculaire au faisceau de mesure.

**7.** Procédé (10) de mesure, pour mesurer la forme d'une interface (103) à mesurer d'un élément optique (1000) comprenant une pluralité d'interfaces, le procédé (10) étant mis en oeuvre par un dispositif (1) de mesure comprenant des moyens de mesure (4000, 6000, 7000) comprenant

- une première source (612, 712) à faible cohérence et un capteur interférométrique en plein champ illuminé par la première source (612, 712) à faible cohérence, et
- une deuxième source (402) à faible cohérence et un capteur interférométrique en mode point illuminé par la deuxième source à faible cohérence,

les moyens de mesure étant configurés pour diriger chacun des faisceaux de mesure (106, 606) des capteurs interférométriques vers l'élément optique (1000) de sorte à traverser ladite pluralité d'interfaces, et pour détecter sélectivement un signal d'interférence résultant d'interférences entre le faisceau de mesure (106, 606) réfléchi par ladite interface (103) à mesurer et un faisceau de référence (616, 716) du capteur interférométrique respectif, le dispositif (1) comprenant en outre des moyens de positionnement (608, 611, 708, 711) et des moyens numériques de traitement, **caractérisé en ce que** ledit procédé (10) comprend les étapes suivantes :

- détermination, à partir du signal d'interférence en mode point, la position optique d'une interface (103) de l'élément optique (1000) le long de l'axe optique (104) de l'élément optique (1000) ;
- positionnement relatif (12), par les moyens de positionnement (608, 611, 708, 711), d'une zone de cohérence et d'un plan objet conjugué d'un plan image du capteur interférométrique en plein champ (6000, 7000) au niveau de l'interface (103) à mesurer ;
- mesure (14) de l'interface (103) par le capteur interférométrique en plein champ (6000, 7000), de sorte à produire un signal d'interférence en plein champ ; et
- traitement (16) du signal d'interférence en plein champ par les moyens numériques de traitement, de sorte à obtenir une information de forme de ladite interface (103) à mesurer selon un champ de vue (108).

**8.** Procédé (10) selon la revendication 7, **caractérisée en ce qu'**au moins l'étape (12) de positionnement de la zone de cohérence et l'étape (14) de mesure sont mises en oeuvre de manière séquentielle pour la mesure de forme de différentes interfaces (103) à mesurer de la pluralité d'interfaces.

**9.** Procédé (10) selon l'une des revendications 7 à 8, **caractérisé en ce que** l'étape (16) de traitement du signal d'interférence comprend une analyse par profilométrie d'une pluralité d'interférogrammes acquis pour une même interface (103) à mesurer.

**10.** Procédé (10) selon la revendication 9, **caractérisé en ce que** la pluralité d'interférogrammes est acquise selon une méthode interférométrique par décalage de phase, ou selon une méthode interférométrique par balayage vertical.

**11.** Procédé (10) selon l'une des revendications 7 à 10, **caractérisé en ce que** l'étape (16) de traitement du signal d'interférence met en oeuvre un procédé de calcul par holographie numérique.

**12.** Procédé (10) selon l'une quelconque des revendications 7 à 11, **caractérisé en ce que** l'étape (16) de traitement du signal d'interférence comprend en outre une étape (20) de correction prenant en compte une information de forme des interfaces traversées par le faisceau de mesure, pour obtenir une information de forme optique et/ou de forme géométrique de l'interface (103) à mesurer.

**13.** Procédé (10) selon l'une quelconque des revendications 7 à 12, **caractérisé en ce qu'**il est mis en oeuvre pour mesurer les formes et les positions des interfaces d'un élément optique (1000) sous la forme d'un assemblage optique avec des lentilles (102), tel qu'un objectif de smartphone, les interfaces (103) comprenant les surfaces des lentilles (102).

**Patentansprüche**

**1.** Messvorrichtung (1) zum Messen der Form einer zu vermessenden Grenzfläche (103) eines optischen Elements (1000), umfassend eine Vielzahl von Grenzflächen, die Vorrichtung (1) umfassend:

- Messmittel (4000, 6000, 7000), umfassend

 o eine erste Quelle (612, 712) mit geringer Kohärenz und einen interferometrischen Vollfeldsensor, der durch die erste Quelle (612, 712) beleuchtet wird, und
 o eine zweite Quelle (402) mit geringer Kohärenz und einen interferometrischen Punktmodussensor, der durch die zweite Quelle (402) beleuchtet wird,

wobei die Messmittel zum Richten jedes der Messstrahlen (106, 606) der interferometrischen Sensoren zu dem optischen Element (1000), um die Vielzahl von Grenzflächen zu durchqueren, und zum selektiven Erfassen eines Interferenzsignals, das aus Interferenzen zwischen dem Messstrahl (106, 606), der durch die zu vermessende Grenzfläche (103) reflektiert wird, und einem Referenzstrahl (616, 716) des jeweiligen interferometrischen Sensors resultiert, konfiguriert sind;
- digitale Verarbeitungsmittel, die zum Bestimmen, aus dem Punktmodusinterferenzsignal, der optischen Position einer Grenzfläche (103) des optischen Elements (1000) entlang der optischen Achse (104) des optischen Elements (1000) konfiguriert sind;
- Positionierungsmittel (608, 611, 708, 711), die zum relativen Positionieren einer Kohärenzzone und einer konjugierten Objektebene einer Bildebene des interferometrischen Vollfeldsensors in Bezug auf die zu vermessende Grenzfläche konfiguriert sind;
- wobei die digitalen Verarbeitungsmittel ferner zum Erzeugen, aus dem Vollfeldinterferenzsignal, von Informationen über die Form der zu vermessenden Grenzfläche (103) gemäß einem Sichtfeld (108) konfiguriert sind.

2. Vorrichtung (1) nach Anspruch 1, **dadurch gekennzeichnet, dass** die Informationen über die Form die optische Form und/oder die geometrische Form der zu vermessenden Grenzfläche (103) umfassen.

3. Vorrichtung (1) nach einem der vorstehenden Ansprüche,
**dadurch gekennzeichnet, dass** der interferometrische Vollfeldsensor ein Michelson-Interferometer umfasst.

4. Vorrichtung (1) nach einem der Ansprüche 1 bis 3,
**dadurch gekennzeichnet, dass** der interferometrische Vollfeldsensor ein Mach-Zehnder-Interferometer umfasst.

5. Vorrichtung (1) nach einem der vorstehenden Ansprüche,
**dadurch gekennzeichnet, dass** die Positionierungsmittel (608, 611, 708, 711) zum Positionieren der Kohärenzzone aufeinanderfolgend in Bezug auf unterschiedliche Grenzflächen (103) des optischen Elements (1000) konfiguriert sind.

6. Vorrichtung (1) nach einem der vorstehenden Ansprüche,
**dadurch gekennzeichnet, dass** sie ferner Bewegungsmittel umfasst, die zum Bewegen des optischen Elements in einer Ebene senkrecht zu dem Messstrahl konfiguriert sind.

7. Messverfahren (10) zum Messen der Form einer zu vermessenden Grenzfläche (103) eines optischen Elements (1000) umfassend eine Vielzahl von Grenzflächen, wobei das Verfahren (10) durch eine Messmittel (4000, 6000, 7000) umfassende Messvorrichtung (1) durchgeführt wird, umfassend

 - eine erste Quelle (612, 712) mit geringer Kohärenz und einen interferometrischen Vollfeldsensor, der durch die erste Quelle (612, 712) mit geringer Kohärenz beleuchtet wird, und
 - eine zweite Quelle (402) mit geringer Kohärenz und einen interferometrischen Punktmodussensor, der durch die zweite Quelle mit geringer Kohärenz beleuchtet wird,

wobei die Messmittel zum Richten jedes der Messstrahlen (106, 606) der interferometrischen Sensoren zu dem optischen Element (1000), um die Vielzahl von Grenzflächen zu durchqueren, und zum selektiven Erfassen eines Interferenzsignals, das aus Interferenzen zwischen dem Messstrahl (106, 606), der durch die zu vermessende Grenzfläche (103) reflektiert wird, und einem Referenzstrahl (616, 716) des jeweiligen interferometrischen Sensors resultiert, konfiguriert sind, die Vorrichtung (1) ferner umfassend Positionierungsmittel (608, 611, 708, 711) und digitale Verarbeitungsmittel, **dadurch gekennzeichnet, dass** das Verfahren (10) die folgenden Schritte umfasst:

 - Bestimmen, aus dem Punktmodusinterferenzsignal, der optischen Position einer Grenzfläche (103) des optischen Elements (1000) entlang der optischen Achse (104) des optischen Elements (1000);
 - relatives Positionieren (12), durch die Positionierungsmittel (608, 611, 708, 711), einer Kohärenzzone und einer konjugierten Objektebene einer Bildebene des interferometrischen Vollfeldsensors (6000, 7000) in Bezug auf die zu vermessende Grenzfläche (103);
- Messen (14) der Grenzfläche (103) durch den interferometrischen Vollfeldsensor (6000, 7000), um ein Vollfeldinterferenzsignal zu erzeugen; und
- Verarbeiten (16) des Vollfeldinterferenzsignals durch die digitalen Verarbeitungsmittel, um Informationen über die Form der zu vermessenden Grenzfläche (103) gemäß einem Sichtfeld (108) zu erhalten.

8. Verfahren (10) nach Anspruch 7, **dadurch gekennzeichnet, dass** mindestens der Positionierungsschritt (12) der Kohärenzzone und der Messschritt (14) sequentiell zum Formmessen unterschiedlicher zu vermessender Grenzflächen (103) der Vielzahl von Grenzflächen durchgeführt werden.

9. Verfahren (10) nach einem der Ansprüche 7 bis 8,
**dadurch gekennzeichnet, dass** der Verarbeitungsschritt (16) des Interferenzsignals eine Profilometrieanalyse einer Vielzahl von Interferogrammen umfasst, die für dieselbe zu vermessende Schnittstelle (103) erfasst werden.

10. Verfahren (10) nach Anspruch 9, **dadurch gekennzeichnet, dass** die Vielzahl von Interferogrammen gemäß einem Phasenverschiebungs-Interferometrieverfahren oder gemäß einem Vertikalabtastungs-Interferometrieverfahren erfasst wird.

11. Verfahren (10) nach einem der Ansprüche 7 bis 10,
**dadurch gekennzeichnet, dass** der Verarbeitungsschritt (16) des Interferenzsignals ein Berechnungsverfahren durch digitale Holographie durchführt.

12. Verfahren (10) nach einem der Ansprüche 7 bis 11,
**dadurch gekennzeichnet, dass** der Verarbeitungsschritt (16) des Interferenzsignals ferner einen Korrekturschritt (20) unter Berücksichtigung von Informationen über die Form der durch den Messstrahl durchquerten Grenzflächen umfasst, zum Erhalten von Informationen über die optische Form und/oder geometrische Form der zu vermessenden Grenzfläche (103).

13. Verfahren (10) nach einem der Ansprüche 7 bis 12,
**dadurch gekennzeichnet, dass** es zum Messen der Formen und der Positionen der Grenzflächen eines optischen Elements (1000) in Form einer optischen Baugruppe mit Linsen (102), wie z. B. ein Smartphone-Objektiv, durchgeführt wird, die Grenzflächen (103) umfassend die Oberflächen der Linsen (102).

**Claims**

1. Measurement device (1), for measuring the shape of an interface (103) to be measured of an optical element (1000) comprising a plurality of interfaces, the device (1) comprising:

- measurement means (4000, 6000, 7000) comprising:

  ◦ a first low-coherence source (612, 712) and a full-field interferometric sensor illuminated by the first source (612, 712),
  ◦ a second low-coherence source (402) and a point-mode interferometric sensor illuminated by the second source (402),

the measurement means being configured to direct each of the measurement beams (106, 606) of the interferometric sensors towards the optical element (1000) so as to pass through said plurality of interfaces, and to selectively detect an interference signal resulting from interferences between the measurement beam (106, 606) reflected by said interface (103) to be measured and a reference beam (616, 716) of the respective interferometric sensor;
- digital processing means configured to determine, from the point-mode interference signal, the optical position of an interface (103) of the optical element (1000) along the optical axis (104) of the optical element (1000);
- positioning means (608, 611, 708, 711) configured for relative positioning of a coherence area and an object plane conjugate of an image plane of the full-field interferometric sensor at the level of the interface to be measured;
- the digital processing means being further configured to produce, based on the full-field interference signal, an item of shape information of said interface (103) to be measured according to a field of view (108).

2.  Device (1) according to claim 1, **characterized in that** the shape information comprises the optical shape and/or the geometric shape of the interface (103) to be measured.

3.  Device (1) according to any one of the preceding claims, **characterized in that** the full-field interferometric sensor comprises a Michelson interferometer.

4.  Device (1) according to any one of claims 1 to 3, **characterized in that** the full-field interferometric sensor comprises a Mach-Zehnder interferometer.

5.  Device (1) according to any one of the preceding claims, **characterized in that** the positioning means (608, 611, 708, 711) are configured to position the coherence area successively at the level of different interfaces (103) of the optical element (1000).

6.  Device (1) according to any one of the preceding claims, **characterized in that** it also comprises displacement means configured to displace the optical element in a plane perpendicular to the measurement beam.

7.  Measurement method (10) for measuring the shape of an interface (103) to be measured of an optical element (1000) comprising a plurality of interfaces, the method (10) being implemented by a measurement device (1) comprising measurement means (4000, 6000, 7000) comprising:

    - a first low-coherence source (612, 712) and a full-field interferometric sensor illuminated by the first low-coherence source (612, 712),
    - a second low-coherence source (402) and a point-mode interferometric sensor illuminated by the second low-coherence source,

    the measurement means being configured to direct each of the measurement beams (106, 606) of the interferometric sensors towards the optical element (1000) so as to pass through said plurality of interfaces, and to selectively detect an interference signal resulting from interferences between the measurement beam (106, 606) reflected by said interface (103) to be measured and a reference beam (616, 716) of the respective interferometric sensor, the device (1) also comprising positioning means (608, 611, 708, 711) and digital processing means, **characterized in that** said method (10) comprises the following steps:

    - determining, from the point-mode interference signal, the optical position of an interface (103) of the optical element (1000) along the optical axis (104) of the optical element (1000);
    - relative positioning (12), by the positioning means (608, 611, 708, 711), of a coherence area and an object plane conjugate of an image plane of the full-field interferometric sensor (6000, 7000) at the level of the interface (103) to be measured;
    - measuring (14) the interface (103) by the full-field interferometric sensor (6000, 7000), so as to produce an interference signal; and
    - processing (16) the full-field interference signal by the digital processing means, so as to obtain an item of shape information of said interface (103) to be measured according to a field of view (108).

8.  Method (10) according to claim 7, **characterized in that** at least the step (12) of positioning the coherence area and the measurement step (14) are implemented sequentially for measuring the shape of different interfaces (103) to be measured of the plurality of interfaces.

9.  Method (10) according to one of claims 7 to 8, **characterized in that** the step (16) of processing the interference signal comprises an analysis using profilometry of a plurality of interferograms acquired for one and the same interface (103) to be measured.

10. Method (10) according to claim 9, **characterized in that** the plurality of interferograms is acquired according to a phase-shifting interferometric method or according to a vertical scanning interferometric method.

11. Method (10) according to one of claims 7 to 10, **characterized in that** the step (16) of processing the interference signal implements a calculation method using digital holography.

**12.** Method (10) according to any one of claims 7 to 11, **characterized in that** the step (16) of processing the interference signal also comprises a correction step (20) taking into account an item of shape information of the interfaces passed through by the measurement beam, in order to obtain an item of optical shape and/or geometric shape information of the interface (103) to be measured.

**13.** Method (10) according to any one of claims 7 to 12, **characterized in that** it is implemented to measure the shapes and/or the positions of the interfaces of an optical element (1000) in the form of an optical assembly with lenses (102), such as a smartphone objective, the interfaces (103) comprising the surfaces of the lenses (102).

Fig. 1a

Fig. 1b

**Fig. 2**

**Fig. 3**

**Fig. 4**

**Fig. 5**

10

| Positionnement relatif d'une zone de cohérence au niveau d'une interface à mesurer | 12 |

| Positionnement relatif d'un plan objet conjugué au niveau d'une interface à mesurer | 13 |

| Mesure interférométrique de l'interface | 14 |

Détermination des informations de forme — 16

détermination de la forme apparente de l'interface — 17

détermination de la forme réelle de l'interface — 18

| Analyse des informations de forme | 19 |

**Fig. 6**

808

d1  e1  d2  e2  d3  e3  d4

Z

**Fig. 7**

## RÉFÉRENCES CITÉES DANS LA DESCRIPTION

**Documents brevets cités dans la description**

- US 9658129 B2

- FR 2959305 A1

**Littérature non-brevet citée dans la description**

- **FOURIER.** *Appl. Opt.,* 1999, vol. 38, 6994-7001

- *Opt. Express,* 2005, vol. 13, 9935-9940
- *Meas. Sci. Technol.,* 2002, vol. 13, R85-R101